# EUROPEAN PATENT SPECIFICATION

(11) **EP 0 592 055 B1**
(45) Date of publication and mention of the grant of the patent: **18.12.1996**
(21) Application number: 93203497.8
(22) Date of filing: 11.11.1991
(51) Int. Cl.: B23K 9/16, B23K 9/32

(54) **A device for hindgas coverage in tube welding**
Vorrichtung zur Schutzgasabdeckung beim Schweissen von Bohren
Appareillage pour obtenir une protection gazeuse lors du soudage de tubes

(30) Priority: 13.11.1990 US 612268
(43) Date of publication of application: 13.04.1994
(62) Divisional of application: 91610089.4
(73) Proprietor: Schnorrer, Walter, DK-9000 Aalborg (DK)
(72) Inventor: Schnorrer, Walter, DK-9000 Aalborg (DK)
(74) Representative: Larsen, Hans Ole

(56) References cited:
- DE-U- 8 628 587
- GB-A- 1 138 685
- GB-A- 2 201 623
- US-A- 3 194 466

## Description

### BACKGROUND

The invention concerns a device for hindgas coverage in welding substantially cylindrical work pieces, especially tube pieces, comprising annular resilient sealing means mounted on a body, that has an axis of symmetry, so as to provide an enclosure of an inner space in a substantially cylindrical work piece or in two substantially cylindrical work pieces abutted together. The sealing means are directed radially in relation to the axis of symmetry of the body and consisting of at least two pieces of plate material of uniform thickness. The device further comprises supply duct means for providing protective gas coverage in said inner enclosure and the device being provided with discharge duct means for the exit of the protective gas.

Such a device is disclosed in GB A 2 201 623. According to this teaching the device consists of mainly two disc-shaped bodies, with supply duct means in one body and discharge ducts in both bodies. When purging the enclosure atmospheric air in the enclosure may take different directions to escape through the discharge ducts. In the embodiment shown in this publication only one discharge duct is shown in a body, and this duct has a diameter-to-length ratio of about 1:3. In order to ensure removal of atmospheric oxygen below the critical level of 25 ppm of oxygen content where oxidation of the welding seam is negligible, the known device is not sufficient or, at least, the time for purging the enclosure is fairly long, as atmospheric air may "hide" in the corners of the enclosure, or the protective gas is mixed up with atmospheric air because of turbulence caused by the non-linear flow from supply duct to discharge duct. Also, the rather large diameter-to-length ratio of the discharge duct poses a risk for injection effects, i.e. the out-flowing gas draws the ambient atmosphere into the enclosure.

### EXPLANATION OF THE INVENTION

The present invention has the characteristic features that the body is provided with two sets of sealing means that are spaced apart and with supply duct means connected to an annularly extending diffusor provided at the outward facing side of the body, and that the device has several discharge duct means mainly evenly distributed over the region between the sealing means and the body or in or on the body, the discharge duct means having an inner diameter in the range of one to five, preferably two to four, millimetres, and a length in the range of six to thirty, preferably ten to twenty, times their inner diameter, and wherein the discharge duct means are distributed annularly between the body and the sealing means and extending mainly parallel to the axis of symmetry.

Thus it is possible to attain a controlled outflow of the gases in the enclosure provided by the device according to the invention. The several discharge ducts enhances a relatively slow, even flow from the supply duct means towards the discharge ducts. The dimensions of the ducts ensure that injection effects do not occur without inducing too much fluid friction because of duct dimensions.

The invention is suitable for use in tube pieces with inner diameter larger than 300 mm and up to 1000 mm or more. A relatively simple and cheap embodiment is therefore possible even in large dimensions while at the same time an even and controlled flow from the supply duct to the discharge duct is ensured. The protective gas will be introduced through and along the entire length of the diffusor and from there move in a laminar flow to the plurality of discharge ducts. A discharge of hindgas will be produced along the entire edge and in both sides of the annular gas chamber thereby preventing the occurrence of unfortunate turbulence in the gas flow in the gas chamber. Furthermore, the enclosure created by using the said embodiment of the invention is thereby mainly torus-shaped and therefore the amount of protective gas may be minimized.

EP A1 348 125 describes an embodiment of a device for hind-gas coverage with discharge outlets consisting of one or more long, narrow ducts. The said application, however, does not discuss the problems of controlled outflow of gases from the enclosure and there is no description of dimensions of the ducts.

Claim 2 indicates a preferred embodiment according to the invention.

In order to achieve a simple and cheap construction the device may have its sealing means arranged as indicated in claim 3.

### THE DRAWING

An embodiment of the invention will now be described with reference to the drawing, where:
fig. 1 shows a partial section of a hindgas coverage device according to the invention and for tubes with a large inner diameter, and
fig. 2 shows on a larger scale a section on the line V-V in fig. 1.

### DESCRIPTION OF THE EMBODIMENT

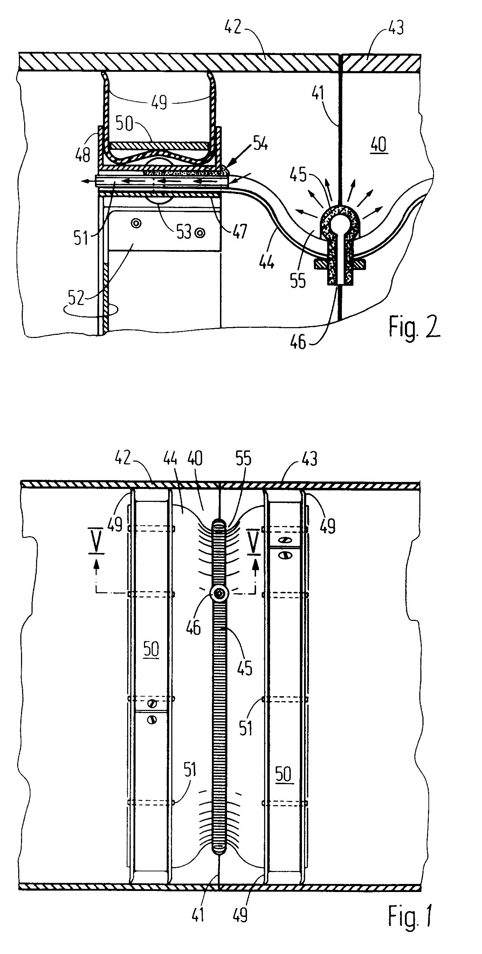

In connection with annular weldings of tube pieces having an inner diameter above 300 mm, the embodiment shown in figs. 1 and 2 is therefore preferably used. This embodiment may, however, also to some extent be used with diameters less than 300 mm.

According to this embodiment an annular enclosure 40 for protective gas is obtained which can be produced with a small volume but still in such a manner that the main part of the gas is found near the welding seam 41. The hindgas device comprises two sealing devices 49, one on each side of the welding seam 41 between the two tube pieces 42, 43 which are to be welded together. Each sealing device 49 is long, narrow piece of plate material welded together at the ends thus forming an annular item of rubber plate of uniform thickness and of heat-resistant type, e.g. silicone rubber. Each item is pressed into a U-shaped support member 48 while fastening it, whereby the limbs of the U point radially outwards, see fig. 2. The outer edge of these is in sealing contact with the inner wall of the tube pieces 42, 43. In order to secure the sealing device 49 in such a manner that it can also be replaced, an annular strap 50 is used which also reinforces the tightening between an annular body 44 and the annular fastening device 48.

Between the sealing devices 49 the enclosure 40 may be flushed by a protective gas (hindgas) as argon which will displace oxygen-containing atmospheric air in the enclosure 40. In the presence of virtual oxygen-free gas oxidation of the welding area's root side is avoided.

The body in this embodiment consists of an annular body 44 of thin stainless steel plate and corrugated axially. The body 44 resembling a pair of bellows is enclosed between the annular fastening device 48 and a likewise annular support part 47 which may be supported by radial arms 52 or the like. Holding together of the parts is effected by rivets 53. The advantage of the corrugated material is that it is easily shaped cylindrically as shown.

In the assembly area between the annular support part 47 and the annular fastening device 48 there is provided a number of discharge ducts 51, for instance eighteen discharge ducts 51 distributed around the periphery. Due to the corrugated shape of the annular body 44, the discharge ducts 51 are easily fitted here in the assembly area which is sealed by silicone rubber 54 or the like. The dimensions of the inner diameter of the discharge ducts 51 are in the range of 1-5 mm, preferably 2-4 mm, and the length of the ducts is 6-30 times their inner diameter, preferably 10-20 times.

For the supply of hindgas a T-shaped inlet pipe 46 is provided which is connected to an annular tubular diffusor 45 such as a perforated tube or a metal tube with spaced leaks, such as a helical metal strip tube. The diffusor 45 is arranged in an annular groove 55, cf. figs. 1 and 2, so that the width of the clear of the enclosure 40 can be held as small as possible, whereas the hindgas is still supplied into the area right below the welding seam 41 and out through the discharge ducts 51. Arrows in fig. 2 indicate the flow direction of the hindgas.

The invention being thus described, it will be obvious that the same may be varied in many ways. Such variations are not to be regarded as a departure from the invention, and all such modifications as would be obvious to one skilled in the art are intended to be included within the meaning of the following claims.

## Claims

1. A device for hindgas coverage in welding substantially cylindrical work pieces (42,43), especially tube pieces, comprising annular resilient sealing means (49) mounted on a body (44), that has an axis of symmetry, so as to provide an enclosure of an inner space (40) in a substantially cylindrical work piece or in two substantially cylindrical work pieces (42, 43) abutted together, the sealing means (49) being directed radially in relation to the axis of symmetry of the body (44) and consisting of at least two pieces of plate material of uniform thickness, the device further comprising supply duct means (46) for providing protective gas coverage in said inner enclosure (40) and the device being provided with discharge duct means (51) for the exit of the protective gas, **characterized** in that the body (44) is provided with two sets of sealing means (49) that are spaced apart and with supply duct means (46) connected to an annularly extending diffusor (45) provided at the outward facing side of the body (44), and that the device has several discharge duct means (51) mainly evenly distributed over the region between the sealing means (49) and the body (44) or in or on the body, the discharge duct means (51) having an inner diameter in the range of one to five, preferably two to four, millimetres, and a length in the range of six to thirty, preferably ten to twenty, times their inner diameter, and wherein the discharge duct means (51) are distributed annularly between the body (44) and the sealing means (49) and extending mainly parallel to the axis of symmetry.

2. A device according to claim 1, wherein the body (44) is made of corrugated thin steel plate material and where the diameter of the annular body (44) is largest close to the sealing means (49).

3. A device according to claim 1 or 2, wherein the sealing means (51) consists of pieces with annular form and circular outer periphery and a U-shaped profile with the limbs in the U protruding in radial direction from the body (44), and where the edge of the annular body (44) is secured between the sealing means and an annular support part (47).

4. A device according to one of claims 1 - 3, wherein the sealing means (49) protrudes in radial direction from the body (44), the protruding part of the sealing means extends 10 to 30 millimetres from the body (44).

## Patentansprüche

1. Vorrichtung zur Schutzgas-Abdeckung beim Schweißen im wesentlichen zylindrischer Werkstücke (42, 43), insbesondere Rohrstücke, mit einer ringförmigen, federnden Dichteinrichtung (49), die an einem, eine Symmetrieachse aufweisenden Körper (44) so angebracht ist, daß ein Einschluß aus einem Innenraum (40) in einem im wesentlichen zylindrischen Werkstück oder in zwei aneinander anstoßenden im wesentlichen zylindrischen Werkstücken (42, 43) gebildet wird, wobei die Dichteinrichtung (49) bezüglich der Symmetrieachse des Körpers (44) im wesentlichen radial gerichtet ist und aus mindestens zwei Plattenmaterialstücken einheitlicher Dicke besteht, und wobei die Vorrichtung außerdem eine Zuführleitungseinrichtung (46) zur Lieferung einer Schutzgasabdeckung in dem inneren Einschluß (40) aufweist und mit einer Ableitungseinrichtung (51) zum Ausströmen des Schutzgases versehen ist,
dadurch **gekennzeichnet**,
daß der Körper (44) mit zwei mit Abstand voneinander angeordneten Dichteinrichtungssätzen (49) und mit einer Zuführleitungseinrichtung (46), die an einen an der auswärts gerichteten Seite des Körpers (44) vorgesehenen, sich ringförmige erstreckenden Diffuser (45) angeschlossen ist, versehen ist, und daß die Vorrichtung mehrere Ableitungseinrichtungen (51) aufweist, die im wesentlichen gleichmäßig über den Bereich zwischen der Dichteinrichtung (49) und dem Körper (44) oder in oder auf dem Körper verteilt sind und einen Innendurchmesser im Bereich von 1 bis 5, vorzugsweise 2 bis 4 mm und eine Länge im Bereich des 6 bis 30-fachen, vorzugsweise 10 bis 20-fachen des Innendurchmessers aufweisen, wobei die Ableitungseinrichtungen (51) zwischen dem Körper (44) und der Dichteinrichtung (49) ringförmig verteilt sind und sich im wesentlichen parallel zu der Symmetrieachse erstrecken.

2. Vorrichtung nach Anspruch 1, wobei der Körper (44) aus einem gewellten dünnen Stahlplattenmaterial besteht und der Durchmesser des ringförmigen Körpers (44) in der Nähe der Dichtungseinrichtung (49) am größten ist.

3. Vorrichtung nach Anspruch 1 oder 2, wobei die Dichtungseinrichtung (51) aus ringförmigen Stücken mit kreisförmigem Außenbereich und einem U-förmigen Profil, wobei die Lippen des U von dem Körper (44) in radiale Richtung hervorstehen, besteht und wobei die Kante des ringförmigen Körpers (44) zwischen der Dichtungseinrichtung und einem ringförmigen Stützelement (47) befestigt ist.

4. Vorrichtung nach einem der Ansprüche 1 bis 3, wobei die Dichteinrichtung (49) von dem Körper (44) in radialer Richtung hervorsteht und sich der hervorstehende Teil der Dichteinrichtung über 10 bis 30 mm von dem Körper (44) weg erstreckt.

## Revendications

1. Dispositif pour la production d'une protection gazeuse dans le soudage de pièces sensiblement cylindriques (42, 43), spécialement de tubes, comprenant des moyens d'étanchéité élastiques annulaires (49) montés sur un corps (44), qui a un axe de symétrie, afin de produire une fermeture d'un espace intérieur (40) dans une pièce sensiblement cylindrique ou dans deux pièces sensiblement cylindriques (42, 43) aboutées, les moyens d'étanchéité (49) étant dirigés radialement par rapport à l'axe de symétrie du corps (44) et constitués d'au moins deux morceaux de plaque d'épaisseur uniforme, le dispositif comprenant en outre un moyen de conduit d'alimentation (46) pour la production d'une couverture de gaz protecteur dans l'enceinte (40) et étant pourvu d'un moyen de conduit d'évacuation (51) pour la sortie du gaz protecteur, caractérisé par le fait que le corps (44) est pourvu de deux groupes espacés de moyens d'étanchéité (49) et d'un conduit d'alimentation (46) joint à un diffuseur s'étendant annulairement (45) prévu sur la face du corps (44) dirigée vers l'extérieur, et que le dispositif a plusieurs conduits d'évacuation (51) sensiblement également répartis sur la région entre les moyens d'étanchéité (49) et le corps (44) ou dans ou sur le corps, les conduits d'évacuation (51) ayant un diamètre intérieur d'un à cinq, de préférence de deux à quatre, millimètres et une longueur de six à trente, de préférence de dix à vingt, fois leur diamètre intérieur, et dans lequel les conduits d'évacuation (51) sont répartis annulairement entre le corps (44) et les moyens d'étanchéité (49) et s'étendent sensiblement parallèlement à l'axe de symétrie.

2. Dispositif selon la revendication 1, dans lequel le corps (44) est fait de tôle d'acier mince ondulée et le diamètre du corps annulaire (44) est le plus grand près des moyens d'étanchéité (49).

3. Dispositif selon l'une des revendications 1 et 2, dans lequel les moyens d'étanchéité sont constitués de morceaux ayant une forme annulaire, une périphérie extérieure circulaire et un profil en U, les jambages du U saillant radialement du corps (44), et le bord du corps annulaire (44) est fixé entre les moyens d'étanchéité et une partie annulaire de support (47).

4. Dispositif selon l'une des revendications 1 à 3, dans lequel les moyens d'étanchéité (49) font saillie radialement du corps (44) et leur partie saillante s'étend sur 10 à 30 millimètres à partir du corps (44).
